# EUROPÄISCHE PATENTSCHRIFT

(11) **EP 2 548 682 B1**
(45) Veröffentlichungstag und Bekanntmachung des Hinweises auf die Patenterteilung: **16.10.2013**
(21) Anmeldenummer: 11005981.3
(22) Anmeldetag: 21.07.2011
(51) Int. Cl.: B23D 47/02, B23D 47/04, B27B 5/065, B27B 31/00

(54) **Verfahren zum Zersägen eines Werkstücks**
Method for sawing a workpiece
Procédé destiné au sciage d'une pièce usinée

(43) Veröffentlichungstag der Anmeldung: 23.01.2013
(73) Patentinhaber: Schelling Anlagenbau GmbH, 6858 Schwarzach (AT)
(72) Erfinder: Fink, Florian, 6850 Dornbirn (AT)
(74) Vertreter: Fechner, Thomas

(56) Entgegenhaltungen:
- EP-A1- 1 362 676
- WO-A1-2005/042214
- DE-U1- 29 713 214

## Beschreibung

Die vorliegende Erfindung betrifft ein Verfahren zum Zersägen zumindest eines Werkstücks, insbesondere einer Platte oder eines Plattenstapels, mit einer Sägemaschine, wobei das Werkstück auf eine Maschinentischoberfläche der Sägemaschine aufgelegt wird und von zumindest einer, entlang zumindest eines, insbesondere geraden, Schnittspalts in der Maschinentischoberfläche verfahrbaren Sägeeinrichtung der Sägemaschine zersägt wird.

Ein derartiges Verfahren geht beispielsweise aus der WO 2005/042214 A1 hervor.

Solche Verfahren sind beim Stand der Technik bekannt. Die eingesetzten Sägemaschinen werden häufig auch als Plattenaufteilanlagen bezeichnet. Sie werden insbesondere dann eingesetzt, wenn als Werkstücke flächige Plattenmaterialien in kleinere Formate geschnitten werden sollen. Das Werkstück wird dabei günstigerweise mittels einer Vorschubeinrichtung der Sägeeinrichtung zugeführt, welche sequenziell die entsprechenden Schnitte ausführt.

Ein Kriterium, um maßgenaue Schnitte hoher Qualität zu erhalten, ist, dass die Auflagefläche für das Werkstück möglichst nahe an das Sägeblatt heranreicht, um die auftretenden Schnittkräfte entsprechend abzustützen und Ausrisse an den geschnittenen Kanten zu vermeiden. Dem entsprechend ist der Schnittspalt in der Auflagefläche nur geringfügig breiter als die Schnittbreite des Sägeblatts.

Wird das Werkstück von der Vorschubeinrichtung für den nächsten Schnitt positioniert, so muss es zuerst über den Schnittspalt in der Auflagefläche geschoben werden. Vor allem dünne, wellige oder unebene Werkstücke bzw. Plattenmaterialien wie z.B. Laminate können sich dabei im Schnittspalt verhaken. Das stört den Arbeitsablauf und kann zu einer Beschädigung des Werkstücks oder der Sägemaschine führen.

In WO 2005/042214 A1 ist eine Sägeeinrichtung mit einer Einrichtung zum Drehen der aufzuteilenden Platte bzw. Plattenstapel offenbart. Die dabei verwendeten Rollen zum Anheben und Drehen der Platte sind im Maschinentisch in Vorschubrichtung vor dem Schnittspalt angeordnet. Diese Rollen können aber ein Verhaken eines gekrümmten oder welligen Werkstücks im Schnittspalt nicht verhindern.

Um den beschriebenen Effekt des sich verhakenden Materials zu verhindern, ist es möglich, die Kanten des Schnittspaltes mit entsprechenden Fasen oder Radien auszuführen. Dadurch verschlechtert sich aber zwangsläufig die Schnittqualität, da die Auflagefläche nicht mehr so nahe an das Sägeblatt heranreicht.

Ein weiterer Lösungsansatz sieht vor, den in Vorschubrichtung nach dem Schnittspalt liegenden Teil der Auflagefläche nach unten zu schwenken, sodass die Kante des Schnittspaltes, an der das Verhaken erfolgt, entsprechend unter dem Niveau der Auflagefläche liegt. Für den Schnitt wird die Auflagefläche wieder nach oben geschwenkt. Eine entsprechende Einrichtung wird z.B. in der DE 297 13 214 U1 in Fig. 1 gezeigt. Diese Lösung funktioniert, die Umsetzung ist aber technisch sehr aufwändig und teuer.

Ein dritter Lösungsansatz besteht darin, dass der Maschinenbediener das verhakte Plattenmaterial von Hand über den Schnittspalt hebt. Dies ist für eine automatisierte Aufteilsäge nicht zufriedenstellend.

Aufgabe der Erfindung ist es daher, ein Verfahren zu entwickeln, das die genannte Problematik möglichst einfach und mit geringerem Aufwand gegenüber gattungsgemäßen Verfahren löst und das bei automatisierten Sägeverfahren eingesetzt werden kann. Das Problem des Einklemmens bzw. Verhakens eines Werkstücks im Schnittspalt soll also entweder ganz verhindert oder ihm soll im Verfahrensablauf dahingehend entgegengewirkt werden, dass der gesamte Arbeitsablauf möglichst wenig gestört wird.

Erfindungsgemäß gelingt dies bei einem Verfahren der oben genannten Art dadurch, dass das Werkstück von zumindest einer Hebeeinrichtung der Sägemaschine durch den Schnittspalt hindurch aus dem und/oder über den Schnittspalt gehoben wird.

Eine Grundidee der Erfindung ist somit, dass das Werkstück, wenn es sich im Schnittspalt verklemmt hat, mittels der Hebeeinrichtung wieder aus dem Schnittspalt und damit aus seiner Verklemmung gehoben wird. Alternativ und/oder zusätzlich kann mit der Hebeeinrichtung ein Verklemmen des Werkstücks im Schnittspalt aber auch von vorn herein vermieden werden, indem das Werkstück mittels einer Hebeeinrichtung über den Schnittspalt gehoben wird.

Bei einer Sägemaschine zum Zersägen zumindest eines Werkstücks, insbesondere einer Platte oder eines Plattenstapels, ist vorgesehen, dass die Sägemaschine eine Maschinentischoberfläche zum Auflegen des Werkstücks auf die Maschinentischoberfläche aufweist und in der Maschinentischoberfläche ein, insbesondere gerader, Schnittspalt angeordnet ist, wobei das Werkstück von einer entlang des Schnittspalts verfahrbaren Sägeeinrichtung der Sägemaschine zersägbar ist und die Sägemaschine eine durch den Schnittspalt hindurch anhebbare Hebeeinrichtung, welche zum Anheben des Werkstücks aus dem und/oder über den Schnittspalt geeignet ist, aufweist. Mit einer solchen Sägeeinrichtung kann auch das erfindungsgemäße Verfahren ausgeführt werden.

Hierbei wird unter einer Sägemaschine die gesamte Einrichtung mit zumindest einem, mindestens einen, vorzugsweise geraden, Schnittspalt aufweisenden Maschinentisch mit einer Maschinentischoberfläche und zumindest einer Sägeeinrichtung, beispielsweise einer Kreissäge, die vorzugsweise an einem Sägewagen montiert ist, verstanden. Die Sägemaschine kann und wird in aller Regel darüber hinaus natürlich noch weitere Bauteile bzw. Komponenten aufweisen. Günstigerweise ist der Sägewagen entlang des Schnittspalts verfahrbar, sodass ein auf der Maschinentischoberfläche aufliegendes Werkstück entlang des Schnittspalts zersägt werden kann. Das Werkstück kann dem Schnittspalt insbesondere mittels zumindest einer Vorschubeinrichtung der Sägemaschine zugeführt werden. Hierzu kann die Vorschubeinrichtung bezüglich des Schnittspalts quer, insbesondere orthogonal, bewegbar und gegebenenfalls beabstandet zum Schnittspalt angeordnet sein. Sie kann dann das Werkstück, bevorzugt einseitig, greifen und über die Maschinentischoberfläche hinweg zur Schnittposition transportieren, vorzugsweise schieben.

Es ist vorteilhaft, wenn die Hebeeinrichtung, vorzugsweise gemeinsam mit der Sägeeinrichtung, entlang des Schnittspalts verfahrbar ist. Hierzu kann die Hebeeinrichtung am Sägewagen montiert werden und beispielsweise unmittelbar unterhalb des Schnittspalts verfahrbar gelagert sein.

Die Hebeeinrichtung kann eine Nocke, die von einem Niveau unterhalb der Maschinentischoberfläche auf ein Niveau oberhalb angehoben bzw. im umgekehrten Fall wieder abgesenkt werden kann, und einen Hubantrieb, beispielsweise einen pneumatischen Hubzylinder, umfassen. Denkbar sind auch mehrere Zwischenstellungen, auf die die Nocke gefahren werden kann, sowie alternative Antriebe, wie z.B. hydraulische, elektrische oder mechanische Varianten. Die Nocke drückt beim Anfahren einer Stellung oberhalb der Maschinentischoberfläche günstigerweise von unten gegen ein im Schnittspalt verklemmtes bzw. über dem Schnittspalt liegendes Werkstück und hebt es nach oben, sodass es aus seiner Verklemmung gelöst und/oder, beispielsweise von einer Vorschubeinrichtung, sicher über den Schnittspalt geschoben werden kann. Vorzugsweise weist die Nocke abgerundete Kanten auf, um mögliche Verletzungen und Beschädigungen beim Kontakt mit Werkstücken zu vermeiden.

Bei bevorzugten Ausgestaltungsformen der Erfindung wird das Werkstück nach dem Schnitt um einen Vorschubweg, d.h. geringfügig, weiter in Richtung der Maschinentischoberfläche jenseits des Schnittspalts vorgeschoben. Die Länge dieses Vorschubwegs ist mit mehr als der Breite des Schnittspalts, z.B. mindestens mit einem 1,5-fachen und vorzugsweise höchstens dem 4-fachen der Breite des Schnittspalts anzusetzen. Die Verschiebung um den Vorschubweg hat zur Folge, dass das Werkstück entweder über den Schnittspalt gleitet oder, sofern es sich im Schnittspalt verhakt hat, gegen ihn vorgespannt wird. Für diesen Fall würde eine weitere Verschiebung über den Vorschubweg hinaus in dieser Richtung den Verlust der Prozesssicherheit bedeuten, welcher sich bestenfalls nur in einer Beschädigung des Werkstücks äußern würde. Deshalb ist bevorzugt vorgesehen, dass nach der Verschiebung um den Vorschubweg ein Stopp erfolgt. Sollte sich das Werkstück im Schnittspalt verhakt haben, so ist es nun in ihm geringfügig vorgespannt und kann im Anschluss von der Hebeeinrichtung bzw. der Nocke nach oben gedrückt, entspannt und über den Schnittspalt gehoben werden. Im Verfahrensablauf kann es auch vorgesehen sein, dass die Hebeeinrichtung unabhängig vom Verhalten des Werkstücks - d.h. sowohl für den Fall des Verhakens als auch für den Fall des Hinübergleitens über den Schnittspalt - aktiviert wird und die Nocke über das Niveau der Maschinentischoberfläche angehoben wird, sodass die Prozesssicherheit in jedem Fall gewährleistet ist, indem das Werkstück in jedem Fall sicher über den Schnittspalt gehoben wird.

Andere Ausgestaltungsformen des erfindungsgemäßen Verfahrens sehen vor, den Fall des Verhakens eines Werkstücks im Schnittspalt mittels einer Kraft- oder Leistungsmesseinrichtung an der Vorschubeinrichtung zu detektieren. Solange das Werkstück lediglich auf der Maschinentischoberfläche verschoben wird, ist die Kraft an der bzw. die Leistungsaufnahme der Vorschubeinrichtung relativ konstant. Ein Verhaken eines Werkstücks im Schnittspalt resultiert aber in einer Spitze also einem steilen Anstieg der von der Vorschubeinrichtung aufzubringenden Kraft bzw. aufgenommenen Leistung. Das Voranschreiten der Vorschubeinrichtung um den Vorschubweg in Vorschubrichtung geht in diesem Fall mit einer Biegung des Werkstücks einher. Auf das Erkennen des Verklemmens eines Werkstücks im Schnittspalt durch die Kraft- bzw. Leistungsspitze folgt bei dieser Ausgestaltungsform die Aktivierung der Hebeeinrichtung, die das Werkstück aus bzw. über den Schnittspalt hebt und entspannt. Alternativ zur Kraft bzw. der aufgenommenen Leistung der Vorschubeinrichtung kann auch eine andere geeignete Größe gemessen und zur Regelung der Hebeeinrichtung verwendet werden.

Bei einer anderen Ausgestaltungsform des erfindungsgemäßen Verfahrens wird die Hebeeinrichtung im Anschluss an den Schnitt über das Niveau der Maschinentischoberfläche ausgefahren, wobei die Nocke der Hebeeinrichtung bei dieser Ausgestaltungsform abgeschrägt ausgebildet ist, um für ein Werkstück als Rampe über den Schnittspalt fungieren zu können. Nachdem die Nocke bzw. Rampe ausgefahren ist, kann das Werkstück sicher über den Schnittspalt geschoben werden. Auf eine Verschiebung um einen Vorschubweg oder eine Detektierung des Verklemmens bzw. Verhakens eines Werkstücks kann verzichtet werden, da, sofern die Nockenausbildung als Rampe und die Einstellung des Niveaus oberhalb der Maschinentischoberfläche auf die Werkstückbeschaffenheit abgestimmt sind, ein Verklemmen oder Verhaken des Werkstücks im Schnittspalt ausgeschlossen werden kann. Die Hebeeinrichtung hebt bei diesen Varianten mit ihrer Rampenfunktion das Werkstück über den Schnittspalt, sodass ein Verklemmen im Schnittspalt vermieden ist.

Weitere Merkmale und Einzelheiten bevorzugter Ausgestaltungsformen werden anhand der Figurenbeschreibung erläutert. Es zeigen:
- Fig. 1: eine Frontalansicht der Sägemaschine einer ersten Ausgestaltungsform;
- Fig. 2: den Längsschnitt AA gemäß Fig. 1;
- Fig. 3: eine Detailansicht B gemäß Fig. 2;
- Fig. 4a,b: eine Ausgestaltungsform der Hebeeinrichtung in Front- und Seitenansicht;
- Fig. 5: eine linear arbeitende Ausgestaltungsform der Hebeeinrichtung;
- Fig. 6: eine Seitenansicht einer zweiten Ausgestaltungsform einer Sägemaschine mit einer Kraft- bzw. Leistungsmesseinrichtung an der Vorschubeinrichtung;
- Fig. 7: eine dritte Ausgestaltungsform der Hebeeinrichtung mit Rampenfunktion.

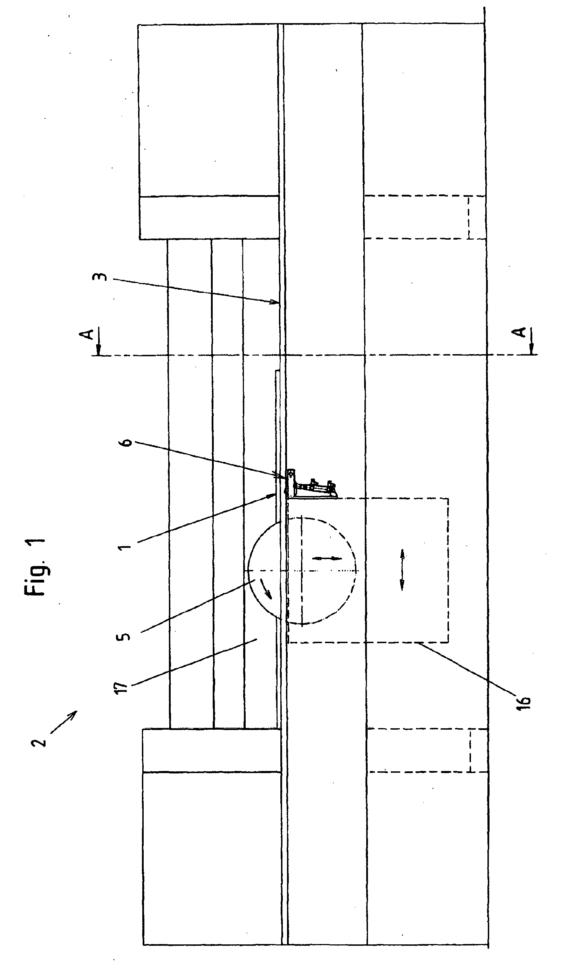

In Fig. 1 ist die schematisierte Frontalansicht einer für ein erfindungsgemäßes Verfahren einsetzbaren ersten Ausgestaltungsform einer Sägemaschine 2 gezeigt. Zentral zu sehen ist die Sägeeinrichtung 5, hier als mittels Sägewagen 16 entlang des Schnittspalts 4 verfahrbare Kreissäge mit einer ebenfalls am Sägewagen montierten Hebeeinrichtung 6 ausgeführt. Ein plattenförmiges Werkstück 1 ist auf die Maschinentischoberfläche 3 der Sägemaschine 2 aufgelegt bzw. wird von einem Druckbalken 17 auf die Maschinentischoberfläche 3 angedrückt, während der Schnitt von rechts nach links oder in die Gegenrichtung entlang des Schnittspalts 4 durchgeführt wird. Das Verfahren des Sägewagens entlang des Schnittspalts 4 wie auch das Anheben und Absenken der Sägeeinrichtung 5 über oder unter die Maschinentischoberfläche 3 wie auch der Antrieb der Sägeeinrichtung 5 können, wie beim Stand der Technik bekannt, ausgeführt werden.

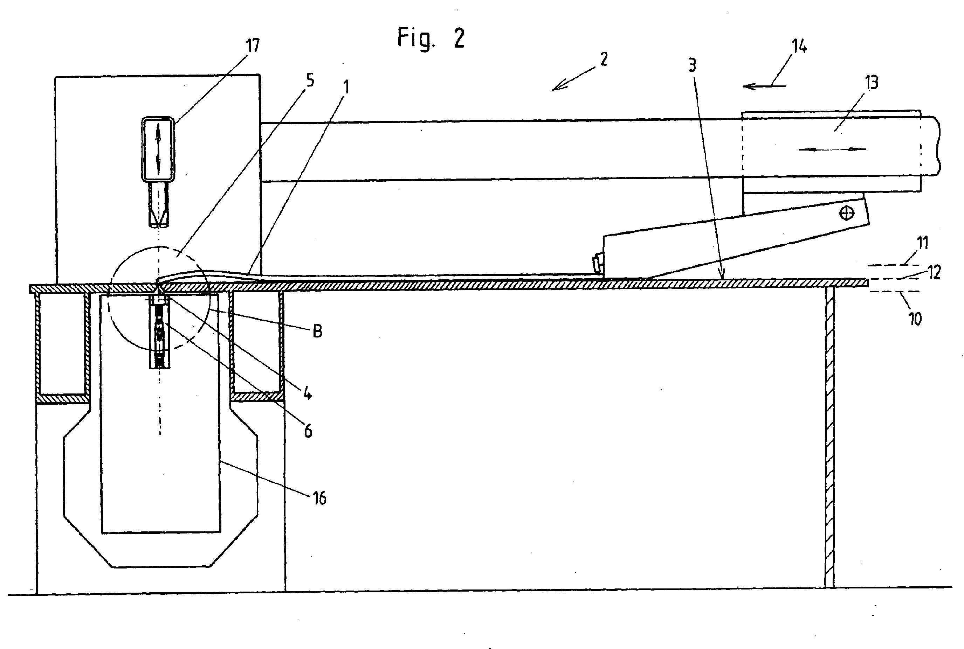

In Fig. 2 ist ein Querschnitt der Sägemaschine 2 entlang der Achse AA in Blickrichtung der Pfeile aus Fig. 1 dargestellt. Sägewagen 16 und Druckbalken 17 sind also von der Seite zu sehen. Das auf der Maschinentischoberfläche 3 aufgelegte Werkstück 1 wurde bereits entlang des Schnittspalts 4 in Darstellungsrichtung geschnitten, der Druckbalken 17 wurde bereits wieder angehoben und das Werkstück 1 durch die Vorschubeinrichtung 13 um einen Vorschubweg 14 nach links in Richtung hin zum Schnittspalt 4 verschoben. Es ist der Fall des Verklemmens bzw. Verhakens des Werkstücks 1 im Schnittspalt 4 dargestellt. Entsprechend ist das Werkstück 1 im Schnittspalt 4 vorgespannt, wie an der Biegung des Werkstücks 1 nach oben im Bereich vor der Sägeeinrichtung 5 zu sehen ist. Weiters sind qualitativ ein Niveau unterhalb 10, oberhalb 11 und das Niveau 12 der Maschinentischoberfläche 3 am rechten Maschinentischende eingezeichnet, wobei diese Niveaus von der Hebeeinrichtung 6 zum Heben des Werkstücks 1 aus dem Schnittspalt 4 angefahren werden können.

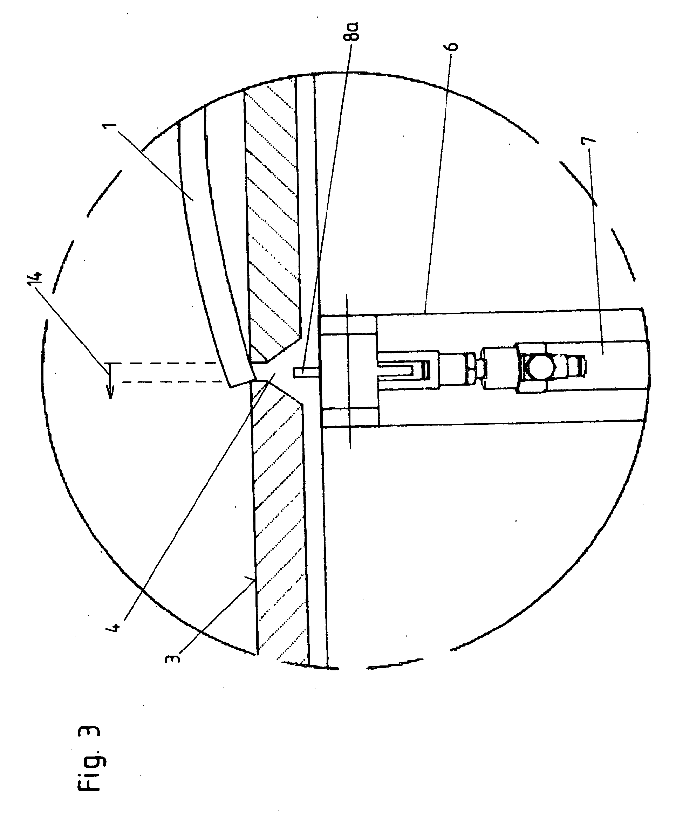

Fig. 3 zeigt das Detail B aus Fig. 2 und damit den Bereich um den Schnittspalt 4 bzw. die Position der Sägeeinrichtung 5. Das Werkstück 1 ist im Schnittspalt 4 verklemmt und vorgespannt, nachdem es um den Vorschubweg 14 auf der Maschinentischoberfläche 3 nach rechts verschoben wurde. Als Komponenten der Hebeeinrichtung 6 sind der, vorzugsweise pneumatisch arbeitende, Hubantrieb 7, mit dem die Nocke 8a von einem Niveau unterhalb 10 auf ein Niveau oberhalb 11 der Maschinentischoberfläche 3 angehoben werden kann, dargestellt. Das Werkstück 1 kann mittels der Hebeeinrichtung 6 aus dem Schnittspalt 4 gehoben und entspannt werden, wobei die Hebeeinrichtung 6 durch den Schnittspalt 4 hindurch auf das Werkstück 1 einwirkt.

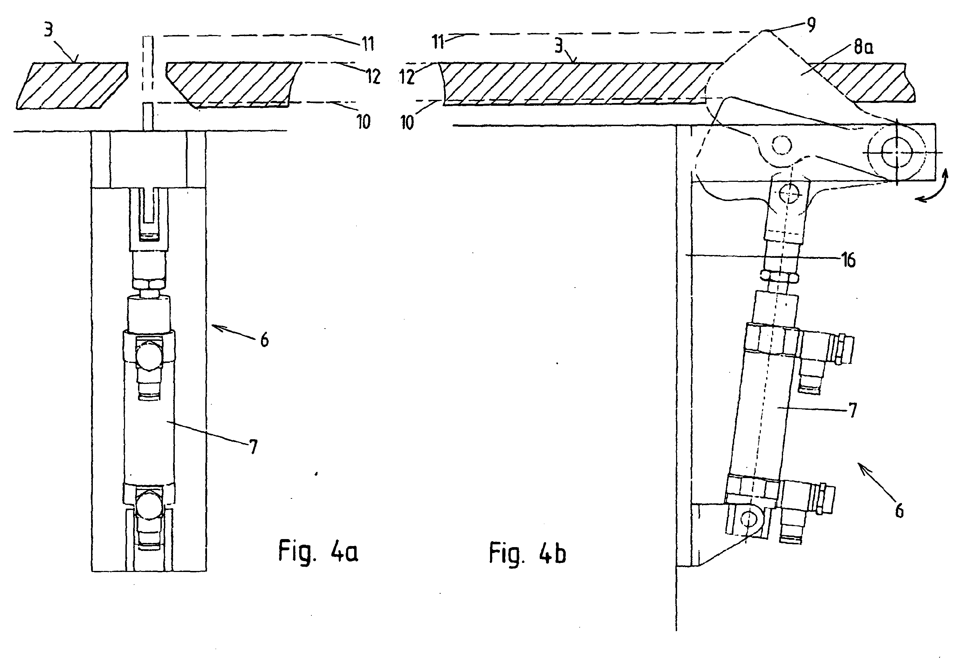

In den Fig. 4a und 4b ist eine Ausgestaltungsform der Hebeeinrichtung 6 im Detail in Seitenansicht in Fig. 4a und in Frontansicht in Fig. 4b dargestellt. Hauptkomponenten sind wie gesagt der Hubantrieb 7 und die Nocke 8a, welche im vorliegenden Ausführungsbeispiel drehbar am Sägewagen 16 gelagert ist und in der Folge mit ihrer Kante 9 bei Aktivierung des Hubantriebs 7 auf einer Kreisbahn von einem Niveau 10 unterhalb auf ein Niveau 11 oberhalb der Maschinentischoberfläche 3 um den Lagerpunkt bewegt wird. Besonders günstig ist es, wenn zumindest die Berührungskante 9 zum Berühren des Werkstücks 1 abgerundet ausgebildet ist, damit das Werkstück 1 beim Heben nicht beschädigt wird.

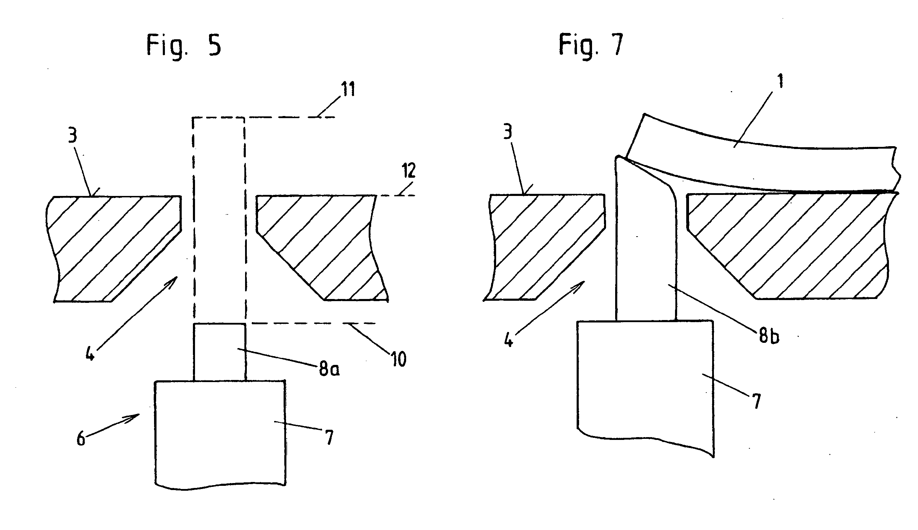

Fig. 5 zeigt eine alternative Ausgestaltungsform der Hebeeinrichtung 6. Die Nocke 8a ist hier derart gelagert, dass sie mittels des Hubantriebs 7 linear anhebbar von einem Niveau 10 unterhalb der Maschinentischoberfläche 3 durch den Schnittspalt 4 hindurch auf zumindest ein Niveau 11 oberhalb der Maschinentischoberfläche 3 angehoben werden kann. Es kann sich dabei bei der Nocke 8a z.B. um einen Kolben einer an sich bekannten hydraulischen oder pneumatischen Kolben- Zylindereinheit handeln.

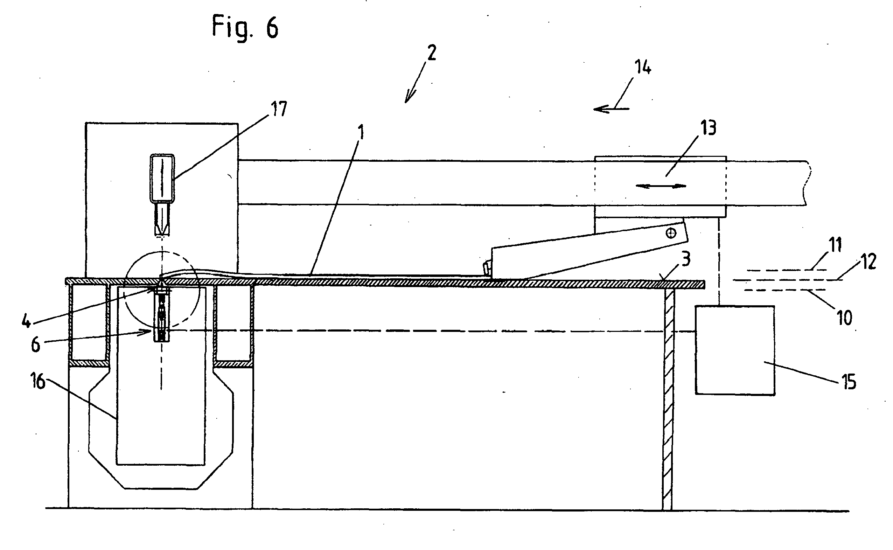

In Fig. 6 ist eine alternative Ausgestaltungsform des erfindungsgemäßen Verfahrens in einer zu Fig. 2 ansonsten analogen Darstellungsweise gezeigt. Als zusätzliche Komponente wird in diesem Ausführungsbeispiel eine Kraft- und/oder Leistungsmesseinrichtung 15 zur Detektion des Verklemmens bzw. Verhakens eines Werkstücks 1 im Schnittspalt 4 eingesetzt. Wie bereits gesagt, steigt die zum Schieben bzw. Bewegen des Werkstücks 1 erforderliche Kraft bzw. Leistung an der Vorschubeinrichtung 13 im Falle eines Verklemmens des Werkstücks 1 im Schnittspalt 4 stark an, wodurch registriert wird, dass ein Werkstück den Schnittspalt 4 nicht überqueren konnte, sondern in ihm eingeklemmt ist. Bei diesem Verfahrensablauf folgt unmittelbar nach der Registrierung des Verklemmens eine Aktivierung der Hebeeinrichtung 6 bzw. ein Heben des verklemmten Werkstücks 1 aus dem Schnittspalt 4. Beim Ausführungsbeispiel von Fig. 7 wird ein Verklemmen des Werkstücks 1 durch eine Maßnahme im Verfahrensablauf generell ausgeschlossen, so dass auf eine Registrierung des Verklemmens bzw. eine Messung der Kraft/Leistung an der Vorschubeinrichtung 13 verzichtet werden kann. Anstelle der im Anschluss an den

Schnitt durchgeführten Verschiebung des Werkstücks 1 um den Vorschubweg 14 sieht der Verfahrensablauf dieses Ausführungsbeispiels nach jedem Schnitt eine vorbeugende Aktivierung der Hebeeinrichtung 6 vor, wobei eine modifizierte, abgeschrägte Nocke 8b zum Einsatz kommt. Indem die Nockenausbildung in der Steilheit der Abschrägung und die Breite des Schnittspalts 4 zueinander passen bzw. auf die Dicke des Werkstücks 1 abgestimmt sind, fungiert die Nocke 8b gegenüber dem Werkstück 1 als Rampe, sodass das Werkstück 1 verlässlich über den Schnittspalt 4 transportiert wird.

### Legende

### zu den Hinweisziffern

- 1: Werkstück
- 2: Sägemaschine
- 3: Maschinentischoberfläche
- 4: Schnittspalt
- 5: Sägeeinrichtung
- 6: Hebeeinrichtung
- 7: Hubantrieb
- 8a: Nocke
- 8b: abgeschrägte Nocke
- 9: abgerundete Nockenkante
- 10: Niveau unterhalb der Maschinentischoberfläche
- 11: Niveau oberhalb der Maschinentischoberfläche
- 12: Niveau der Maschinentischoberfläche
- 13: Vorschubeinrichtung
- 14: Vorschubweg
- 15: Kraft- und/oder Leistungsmesseinrichtung
- 16: Sägewagen
- 17: Druckbalken

## Patentansprüche

1. Verfahren zum Zersägen zumindest eines Werkstücks (1), insbesondere einer Platte oder eines Plattenstapels, mit einer Sägemaschine (2), wobei das Werkstück (1) auf eine Maschinentischoberfläche (3) der Sägemaschine (2) aufgelegt wird und von zumindest einer, entlang zumindest eines, insbesondere geraden, Schnittspalts (4) in der Maschinentischoberfläche (3) verfahrbaren Sägeeinrichtung (5) der Sägemaschine (2) zersägt wird, **dadurch gekennzeichnet, dass** das Werkstück (1) von zumindest einer Hebeeinrichtung (6) der Sägemaschine (2) durch den Schnittspalt (4) hindurch aus dem und/oder über den Schnittspalt (4) gehoben wird.

2. Verfahren nach Anspruch 1, **dadurch gekennzeichnet, dass** die Hebeeinrichtung (6) zumindest einen Hubantrieb (7) und zumindest eine vom Huban-trieb (7) betätigte Nocke (8a,8b), vorzugsweise mit abgerundeten Kanten (9), aufweist, und das Werkstück (1) mittels der vom Hubantrieb (7) betätigten Nocke (8a,8b) aus dem und/oder über den Schnittspalt (4) gehoben wird.

3. Verfahren nach Anspruch 2, **dadurch gekennzeichnet, dass** die Nocke (8a,8b) mittels des Hubantriebs (7) von einem ersten Niveau (10) unterhalb der Maschinentischoberfläche (3), durch den Schnittspalt (4) hindurch, auf zumindest ein weiteres Niveau (11) oberhalb der Maschinentischoberfläche (3) angehoben wird, um das auf der Maschinentischoberfläche (3) liegende Werkstück (1) aus dem und/oder über den Schnittspalt (4) zu heben.

4. Verfahren nach einem der Ansprüche 1 bis 3, **dadurch gekennzeichnet, dass** das Werkstück (1) mittels einer Vorschubeinrichtung (13) der Sägemaschine (2) in einer Richtung quer, vorzugsweise orthogonal, zum Schnittspalt (4) auf der Maschinentischoberfläche (3) transportiert und/oder positioniert wird.

5. Verfahren nach Anspruch 4, **dadurch gekennzeichnet, dass** das Werkstück (1) im Anschluss an einen, entlang des Schnittspalts (4) durchgeführten, Schnitt von der Vorschubeinrichtung (13) um einen, vorzugsweise einstellbaren, Vorschubweg (14), welcher größer als die Breite des Schnittspalts (4) und vorzugsweise kleiner als das Vierfache der Breite des Schnittspalts (4) ist, über den Schnittspalt (4) geschoben wird, und das dabei gegebenenfalls im Schnittspalt (4) verklemmte und/oder vorgespannte Werkstück (1) von der Hebeeinrichtung (6) aus dem und/oder über den Schnittspalt (5) gehoben wird.

6. Verfahren nach Anspruch 5, **dadurch gekennzeichnet, dass** die Vorschubeinrichtung (13) immer am Ende des Vorschubweges (14) gestoppt wird und anschließend immer das gegebenenfalls im Schnittspalt (4) verklemmte und/oder vorgespannte Werkstück (1) von der Hebeeinrichtung (6) aus dem und/oder über den Schnittspalt (4) gehoben wird.

7. Verfahren nach Anspruch 4, **dadurch gekennzeichnet, dass** ein Verklemmen des Werkstücks (1) im Schnittspalt (4) mittels einer die Vorschubeinrichtung (13) überwachenden Kraft- oder Leistungsmesseinrichtung (15) erkannt wird, wobei, vorzugsweise nur, im Falle der Erkennung des Verklemmens des Werkstücks (1), das Werkstück (1) von der Hebeeinrichtung (6) aus dem und/oder über den Schnittspalt (4) gehoben wird.

8. Verfahren nach Anspruch 4, **dadurch gekennzeichnet, dass** im Anschluss an einen, entlang des Schnittspalts (4) durchgeführten, Schnitt mittels der Hebeeinrichtung (6) eine abgeschrägte Nocke (8b) der Hebeeinrichtung (6) durch den Schnittspalt (4) über das Niveau (12) der Maschinentischoberfläche (3) ausgefahren wird und anschließend das Werkstück (1) von der Vorschubeinrichtung (13) über die, als Rampe wirkende, abgeschrägte Nocke (8b) und damit über den Schnittspalt (4) transportiert, vorzugsweise geschoben, wird.

## Claims

1. Method of sawing up at least one workpiece (1), and in particular one sheet of material or one stack of sheets of material, with a sawing machine (2), the workpiece (1) being placed down on a surface (3) of a table of the sawing machine (2) and being sawn up by at least one sawing means (5) of the sawing machine (2) which is displaceable in the surface (3) of the table of the machine along at least one cutting slot (4), which is in particular straight, **characterised in that** the workpiece (1) is lifted out of and/or across the cutting slot (4), through the cutting slot (4), by at least one lifting arrangement (6) of the sawing machine (2).

2. Method according to claim 1, **characterised in that** the lifting arrangement (6) has at least one lifting drive (7) and at least one cam (8a, 8b), preferably having rounded edges (9), which is actuated by the lifting drive (7), and the workpiece (1) is lifted out of and/or across the cutting slot (4) by means of the cam (8a, 8b) actuated by the lifting drive (7).

3. Method according to claim 2, **characterised in that** the cam (8a, 8b) is lifted through the cutting slot (4) by means of the lifting drive (7) from a first level (10) below the surface (3) of the table of the machine to at least one further level (11) above the surface (3) of the table of the machine in order to lift the workpiece (1) resting on the surface (3) of the table of the machine out of and/or across the cutting slot (4).

4. Method according to one of claims 1 to 3, **characterised in that** the workpiece (1) is transported and/or positioned on the surface (3) of the table of the machine in a direction transverse to, and preferably orthogonal to, the cutting slot (4) by means of a feeding arrangement (13).

5. Method according to claim 4, **characterised in that**, following a cut made along the cutting slot (4), the workpiece (1) is pushed across the cutting slot (4) by the feeding arrangement (13) through a fed travel (14) which can preferably be set and which is greater than the width of the cutting slot (4) and preferably smaller than four times the width of the cutting slot (4), and the workpiece (1), having possibly become jammed and/or preloaded in the cutting slot (4) in the course of this, is lifted out of and/or across the cutting slot (5) by the lifting arrangement (6).

6. Method according to claim 5, **characterised in that** the feeding arrangement (13) is always stopped at the end of the fed travel (14) and the workpiece (1) which has possibly become jammed and/or pre-loaded in the cutting slot (4) is then always lifted out of and/or across the cutting slot (4) by the lifting arrangement (6) .

7. Method according to claim 4, **characterised in that** jamming of the workpiece (1) in the cutting slot (4) is detected by means of a force- or power-measuring arrangement (15) which monitors the feeding arrangement (13), the workpiece (1) preferably being lifted out of and/or across the cutting slot (4) by the lifting arrangement (6) only in the event of jamming of the workpiece (1) being detected.

8. Method according to claim 4, **characterised in that**, following a cut made along the cutting slot (4), a bevelled cam (8b) belonging to the lifting arrangement (6) is extended through the cutting slot (4) by means of the lifting arrangement (6) to a point above the level (12) of the surface (3) of the table of the machine and the workpiece (1) is then transported, and preferably pushed, by the feeding arrangement (13) across the bevelled cam (8b), which acts as a ramp, and hence across the cutting slot (4).

## Revendications

1. Procédé de sciage d'au moins une pièce (1), en particulier d'une plaque ou d'une pile de plaques, avec une machine à scier (2), la pièce (1) étant posée sur une surface de table (3) de la machine à scier (2) et étant sciée par au moins un dispositif de sciage (5) de la machine à scier (2) déplaçable sur la surface de table de machine (3), le long d'au moins une fente de coupe (4), en particulier une fente droite, **caractérisé en ce que** la pièce (1) est relevée de la fente de coupe (4) et/ou soulevée au-dessus de celle-ci par au moins un dispositif de levage (6) de la machine à scier (2) passant à travers la fente de coupe (4).

2. Procédé selon la revendication 1, **caractérisé en ce que** le dispositif de levage (6) comporte au moins un entraînement de levage (7) et au moins une came (8a, 8b) actionnée par l'entraînement de levage (7), préférentiellement avec des bords arrondis (9), et **en ce que** la pièce (1) est relevée de la fente de coupe (4) et/ou soulevée au-dessus de celle-ci par la came (8a, 8b) actionnée par l'entraînement de levage (7).

3. Procédé selon la revendication 2, **caractérisé en ce que** la came (8a, 8b) est montée par l'entraînement de levage (7) d'un premier niveau (10) en dessous de la surface de table de machine (3) vers au moins un autre niveau (11) au-dessus de la surface de table de machine (3), en passant à travers la fente de coupe (4), pour relever de la fente de coupe (4) et/ou soulever au-dessus de celle-ci la pièce (1) reposant sur la surface de table de machine (3).

4. Procédé selon l'une des revendications 1 à 3, **caractérisé en ce que** la pièce (1) est transportée et/ou positionnée au moyen d'un dispositif d'avance (13) de la machine à scier (2) dans une direction transversale, préférentiellement orthogonale à la fente de coupe (4) sur la surface de table de machine (3).

5. Procédé selon la revendication 4, **caractérisé en ce que**, suite à une coupe exécutée le long de la fente de coupe (4), la pièce (1) est poussée au-dessus de la fente de coupe (4) par le dispositif d'avance (13) d'une course d'avance (14) préférentiellement réglable, supérieure à la largeur de la fente de coupe (4) et préférentiellement inférieure au quadruple de la largeur de la fente de coupe (4), et **en ce que** la pièce (1) alors éventuellement coincée dans la fente de coupe (4) et/ou précontrainte est relevée de la fente de coupe (4) et/ou soulevée au-dessus de celle-ci par le dispositif de levage (6).

6. Procédé selon la revendication 5, **caractérisé en ce que** le dispositif d'avance (13) est toujours arrêté à la fin de la course d'avance (14), et **en ce que** la pièce (1) éventuellement coincée dans la fente de coupe (4) et/ou précontrainte par le dispositif de levage (6) est ensuite toujours relevée de la fente de coupe (4) et/ou soulevée au-dessus de celle-ci par le dispositif de levage (6).

7. Procédé selon la revendication 4, **caractérisé en ce qu'**un coincement de la pièce (1) dans la fente de coupe (4) est détecté par un dispositif de mesure de force ou de puissance (15) surveillant le dispositif d'avance (13), la pièce (1) étant relevée de la fente de coupe (4) et/ou soulevée au-dessus de celle-ci par le dispositif de levage (6) en cas de détection du coincement de la pièce (1), et préférentiellement seulement dans ce cas.

8. Procédé selon la revendication 4, **caractérisé en ce que**, suite à une coupe exécutée le long de la fente de coupe (4), une came biseautée (8b) du dispositif de levage (6) est sortie par le dispositif de levage (6), à travers la fente de coupe (4) au-dessus du niveau (12) de la surface de table de machine (3), et **en ce que** la pièce (1) est ensuite transportée, préférentiellement poussée par le dispositif d'avance (13) au-dessus de la came biseautée (8b) servant de rampe, et par conséquent au-dessus de la fente de coupe (4).
